# EUROPEAN PATENT SPECIFICATION

(11) **EP 2 095 029 B1**
(45) Date of publication and mention of the grant of the patent: **11.03.2015**
(21) Application number: 07847873.2
(22) Date of filing: 06.12.2007
(51) Int. Cl.: E04B 9/00, F24D 3/16, E04B 9/04

(54) **PANEL TO MAKE A MODULAR SOUNDPROOFING/CONDITIONING WALL, AND RELATIVE METHOD OF PRODUCTION**
PLATTE ZUR HERSTELLUNG EINER MODULAREN SCHALLDÄMPFUNGS-/KLIMATISIERUNGSWAND UND ENTSPRECHENDES HERSTELLUNGSVERFAHREN
PANNEAU POUR FABRIQUER UNE PAROI MODULAIRE D'INSONORISATION/DE CONDITIONNEMENT, ET PROCÉDÉ DE PRODUCTION ASSOCIÉ

(30) Priority: 07.12.2006 IT UD20060258
(43) Date of publication of application: 02.09.2009
(73) Proprietor: PATT SpA, 33040 Attimis UD (IT)
(72) Inventor: TOMADINI, Christian, 33100 Udine (IT)
(74) Representative: Petraz, Gilberto Luigi
(86) International application number: PCT/EP2007/063385
(87) International publication number: WO 2008/068298

(56) References cited:
- EP-A- 1 512 915
- WO-A-01/59371
- AT-B- 413 121
- DE-A1- 10 013 051
- DE-U1-202006 000 201

## Description

### FIELD OF THE INVENTION

The present invention concerns a panel or module which, in association with similar panels, is able to constitute a modular type sound-proofing and conditioning wall, that is, consisting of a plurality of panels or modules associated with each other. The wall obtained with the panels according to the invention can be used for covering vertical or horizontal surfaces of rooms or premises where a good acoustic absorption is desired, particularly, though not exclusively, in meeting rooms, conference rooms, concert halls, gymnasiums, study rooms, work rooms or other. In particular, the present invention concerns a panel which associates with the sound-proofing function the function of radiation through thermal irradiance and convection, in climatizing a room.

### BACKGROUND OF THE INVENTION

Sound-proofing walls of the modular type are known, of the type used to cover internal walls of a room or as elements to separate or partition rooms, in order to reduce the echo and/or noise in the room where said panels are applied.

Sound-proofing walls of the known type normally consist of a plurality of panels or modules, associated with each other defining relative join grooves, and made of wood-based composite material, such as plywood, MDF, chipboard or other, and covered on the visible surface by enhancing cover films.

Solutions are known in which each panel also comprises, on an external surface, a plurality of grooves open towards the outside.

Here and hereafter in the description and the claims, for a more practical description, by the term groove we mean both substantially parallel rectilinear grooves and also holes, and millings of various types with a curved, linear or mixed development, also forming designs or alphanumerical signs on the external surface of the panel.

In this known solution, the grooves are at least partly through, by means of relative transverse through holes open on the interval or rear surface of the panel. In this way, the passage is permitted of the sound waves through the grooves and channels, substantially over the whole surface of the known sound-proofing wall.

Solutions are also known in which each groove is shaped in such a way that its lateral flanks, at least in the direction of the length, have an undulating development specular with respect to a median longitudinal axis passing through the groove, so that its amplitude is variable on the length from a minimum value to a maximum value.

This lack of uniform amplitude in the groove allows to vary the usable gap in the front aperture of the through holes, thus increasing the possibility that a wider spectrum of sound waves can pass through the panel, hence bringing an improved quality to the level of acoustic absorption of the sound-proofing wall.

In the field of finishings in the building trade, sound-proofing panels until now have been designed and used with the sole purpose of guaranteeing an optimum acoustic absorption of the sound waves.

Parallel to sound-proofing panels, there is a growing and more widespread need to provide conditioning plants, of the so-called radiant wall type, by means of which, with relatively limited energy consumption, it is possible to climatize the rooms without providing radiators, thermal convectors, split or other external radiant members concentrated at determinate delivery points.

It is known to make such conditioning plants by laying a plurality of pipes or tubes over the whole extension of the vertical or horizontal wall; the tubes are then covered with a layer of plasterboard, or even plaster, which defines the visible surface of the wall.

This type of wall, the so-called radiant wall, has the main disadvantage however that, in the event of malfunctioning of the plant, it requires long and expensive times for intervention and maintenance, with the need to completely dismantle or partly demolish the plasterboard cover in order to access the tubes.

WO-A1-01/59371 discloses a heat transfer tile comprising a first flat metal sheet facing the environment, a second flat metal plate adjacent to the first flat plate, a third shaped metal plate welded to the second flat plate and defining therewith an elongated channel for passage of a heating or cooling fluid through the tile, and an insulation board.

Although it is mentioned that the flat plates disclosed therein may have holes on their surfaces, this prior art tile does not display high soundproofing properties and does not allow a great thermal exchange of the convective type with the environment to be conditioned.

DE-A1-100 13 051 discloses a panel having a plurality of cavities open towards the environment, and a plurality of seatings for the passage of a heating or cooling fluid. Said seatings are separated from said cavities by a thickness of metal material, so that the propagation of the heated or cooled flux happens only for conduction and radiation and not exploiting convective motions of the thermal medium. AT-B-413121 discloses the features of the preamble of claim 1.

One purpose of the present invention is to achieve a panel or module to compose a modular-type sound-proofing wall, which is simple and economical to make, which guarantees acoustic absorption of the sound waves, substantially whatever their wave length and, at the same time, allows to effectively climatize the room where it is installed.

Another purpose of the present invention is to perfect a method to make a panel or module of a modular sound-proofing wall, in a simple and economical manner, which guarantees acoustic absorption of the sound waves, substantially whatever their wave length and, at the same time, allows to effectively climatize the room where it is installed.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a panel according to the present invention is applied in association with other similar panels to define a sound-proofing and thermally conditioning wall of the modular type usable for covering walls and/or ceilings and/or floors of rooms such as study rooms, meeting rooms, work rooms or other.

Each panel comprises at least an external surface facing towards the environment that generates the noise and that is to be thermally conditioned, at least a groove open towards the outside and made on said external surface, and a plurality of through holes communicating with the groove and open on an internal surface opposite and substantially parallel to the external surface.

Said through holes define an enlargement with respect to the related grooves with which communicate, each of them thus defining a soundproofing chamber for the noise generated in the environment.

The panel also comprises, integrated therewith, thermal conditioning means associated with its internal surface, so as to define therewith a single body with an integrated sound-proofing and conditioning module.

The panel is further coupled with an insulation board facing the internal surface of the panel itself.

According to a feature of the present invention, the thermal conditioning means are mainly distributed on said internal surface of the panel in a position that is offset with respect to said through holes that define the soundproofing chambers, and said insulated board is distanced from said internal surface of the panel by a gap, so as to define a chamber communicating with said through holes which has the double effect to further attenuate the sound waves passing through the grooves and the through holes, and to allow the conditioned flux of air to move through the grooves and the holes towards the environment, which is thus thermally conditioned also exploiting the convective motions which move from the inside of the panel towards the outside and the environment.

With the present invention we thus have that each sound-proofing panel that makes up the wall is also able to constitute a functional element, of the modular type, of a thermal conditioning system using both an irradiance and a convective effect, both heating and cooling, so that the sound-proofing wall itself can be considered a so-called radiant wall to climatize the environment.

Moreover, since it is substantially a module, the panel according to the present invention can be individually and independently removed from the wall without intervening on the adjacent panels, and thus targeted maintenance operations can be effected on the specific radiant means, without needing to completely dismantle or demolish part of the external covering of the wall, as happens now with known radiant walls.

Another advantage given by integrating the radiant means with the sound-proofing panel directly on the internal surface of the panel is that it is possible to exploit the through holes and the grooves open towards the outside in order to spread the thermal flow emitted by the radiant means with greater effectiveness.

Advantageously, in a first form of preferential embodiment, the radiant means comprises at least a thermal path, such as a pipe, a coil or other, suitably distributed along the internal surface of the panel, so that the latter can selectively emit a thermal flow, hot or cold, substantially uniform.

According to a preferred embodiment of the invention, the thermal path is at least partly integrated in a relative housing seating in the thickness of the panel.

According to another variant, the thermal path is associated by thermo-coupling, screwing, or other, with the outside of the internal surface of the panel.

In a second preferential form of embodiment the radiant means comprises, in association with or alternative to the thermal path, at least a radiant plate, extending for a substantial part of the area of said internal surface, so as to spread the thermal flow, hot or cold, uniformly.

According to a first variant, the at least one radiant plate is at least partly integrated in a relative housing seating in the thickness of the panel.

According to another variant, the at least one radiant plate is associated by thermo-coupling, screwing or other, with the outside of the internal surface of the panel.

According to another variant, the at least one radiant plate is associated by welding or braze welding with the thermal path.

According to another variant, the at least one radiant plate includes, integrated therewith, the thermal path, for example made by means of serigraphic printing.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a section view of a preferred embodiment of the panel according to the invention;
- fig. 2 shows a section view of another embodiment of the panel according to the invention;
- fig. 3 is a three-dimensional exploded view of the panel of fig. 2;
- fig. 4 shows a plan view from the rear of the panel of fig. 2.

### DETAILED DESCRIPTION OF PREFERENTIAL

### FORMS OF EMBODIMENT

With reference to the attached drawings, a panel 10, 100 or module according to the present invention is able to be associated with a plurality of similar panels 10, 100 in order to create a sound-proofing wall 11, for example of the type able to cover a wall 35 and/or a ceiling of a room, or environment, where it is desired to guarantee a high acoustic absorption.

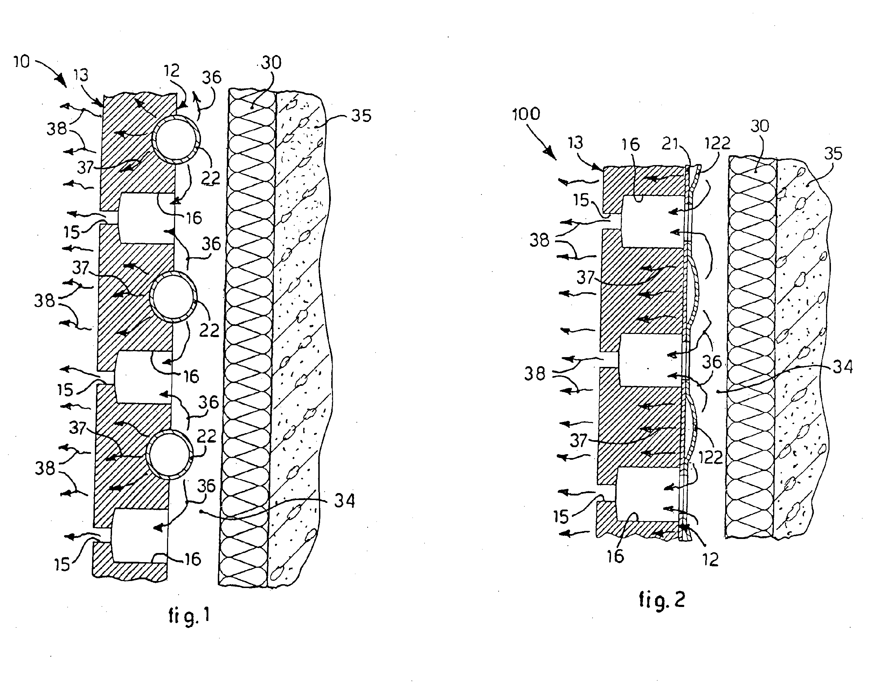

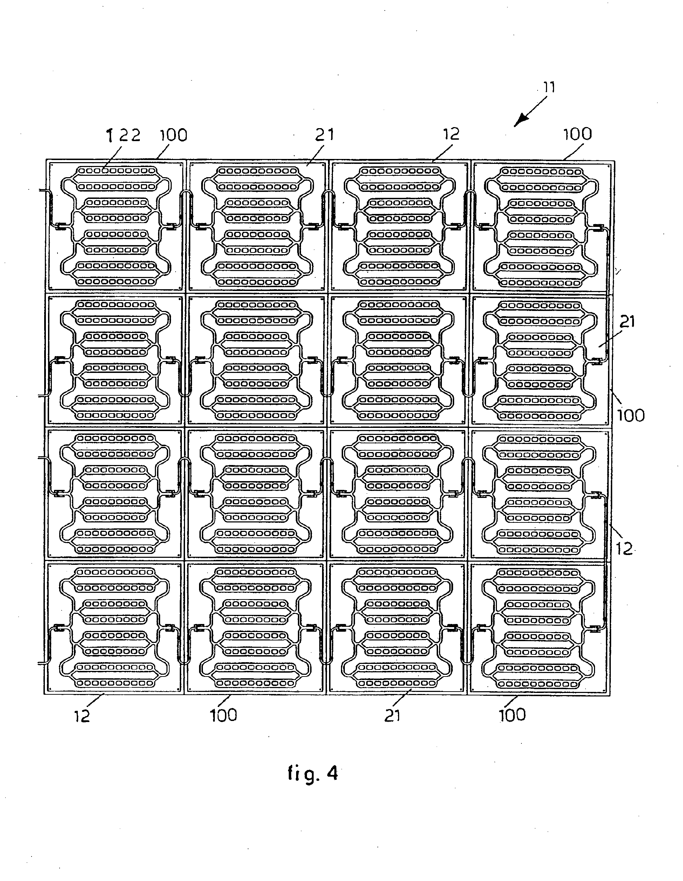

According to the present invention, each panel 10, 100 comprises, substantially integrated therewith, heating means, in the case of fig. 1 a plurality of tubes 22 and in the case of figs. 2-4 a radiant plate 21 provided with a thermal circuit 122, in which a thermo vector fluid, hot or cold, is selectively able to flow, so that the sound-proofing wall 11 consisting of panels 10, 100 can also be considered as a radiant wall in order to climatize the space where it is installed.

Each panel 10, 100 is substantially rectangular in shape, it is made of wood-based composite material, chipboard or MDF, and has an enhanced front surface 13 facing towards the space that generates the noise and/or is to be climatized. A plurality of longitudinal grooves 15, open towards the outside, are made, for example by means of mechanical working by removing material, such as milling, etching or other, on the front surface 13.

Each of the grooves 15 is substantially rectangular in shape and is also open towards a rear or internal surface 12 of the panel 10, 100 by means of respective holes 16 aligned with the groove 15. The internal surface 12 is substantially parallel and opposite to the front surface 13.

Each hole 16 defines an enlargement with respect to the respective groove 15, so as to define a soundproofing chamber for the noise generated in the environment.

In this way, through the grooves 15 and the respective communicating holes 16, each panel 10, 100 allows the sound waves generated to pass completely through its thickness, so that the sound waves are dissipated to the rear of the panel 10, by exploiting the effect of the Helmoltz resonator, without being reflected.

In this case, the grooves 15 of the panel 10, 100 are disposed at a relatively close distance from each other, so as to increase their capacity for acoustic absorbance and create a desired aesthetic effect.

According to an improved variant, not shown here, each groove 15 has an undulating development specular to its median axis, so that the amplitude of the external aperture of the respective groove 15 is variable alternately on the length of the panel 10, 100 from a minimum value to a maximum value.

The panel 10, 100 is further coupled with an insulation board 30, located between the panel 10, 100 and the mounting wall 35, and separated from the panel 10, 100 by a gap so as to define a chamber 34 having a set width.

The heating means, specifically the tubes 22 of fig. 1 and the circuit 122 of fig. 2, are attached to the internal surface 12 of the panel 10 in such a way that they are substantially offset with respect to the through holes 16.

With reference to fig. 1, the tubes 22 inside which the thermo-convector fluid flows are partly inserted in half-circular seatings provided in the thickness of the panel 10, in an alternate position with respect to the through holes 16. In such a way, from one hand, it is possible to exploit the maximum ability of the grooves 15 and the holes 16 to exert their soundproofing effect, since their free volume is not limited nor obstructed in any way.

From another hand, the respective position of the grooves 15, the holes 16 and the tubes 22, together with the provision of the chamber 34, allow to generate convective motions of the heated or cooled air flux (see the arrows 36) that increase the thermal conditioning capacity of the panel, summing up with the thermal flux transmitted by the conductive effect through the thickness of the panel 10, 100 (see the arrows 37) and the flux transmitted towards the outside by the radiating effect (see the arrows 38).

In fact, along the chamber 34 the conditioned air, which is heated or cooled by the thermo vector fluid that flows in the tubes 22, increases its speed, due to the generation of convective motions, and the speed of the conditioned air is further increased by passing through the holes 16 and the grooves 15. In this way, the thermal capacity of the conditioned flux transmitted from the panel 10, 100 is highly enhanced.

In the solution of fig. 2, a radiant plate 21 is coupled with the internal surface 12 of the panel 100 and the circulation circuit 122 provided thereon is, again, located offset with respect to the through holes 16, thus obtaining the same advantages both in the soundproofing and in the conditioning capacity above disclosed.

The radiant plate 21 is made of thermoconductor metal material and has a surface extension substantially equal to that of the panel 10.

In this case, the radiant plate 21 is associated by thermo-coupling directly with the rear surface 12 of the panel 100, for example by interposing between the internal surface 12 and the radiant plate 21 a bi-adhesive film, suitable to keep its adhesive characteristics substantially unchanged even if subjected to great differences in temperature.

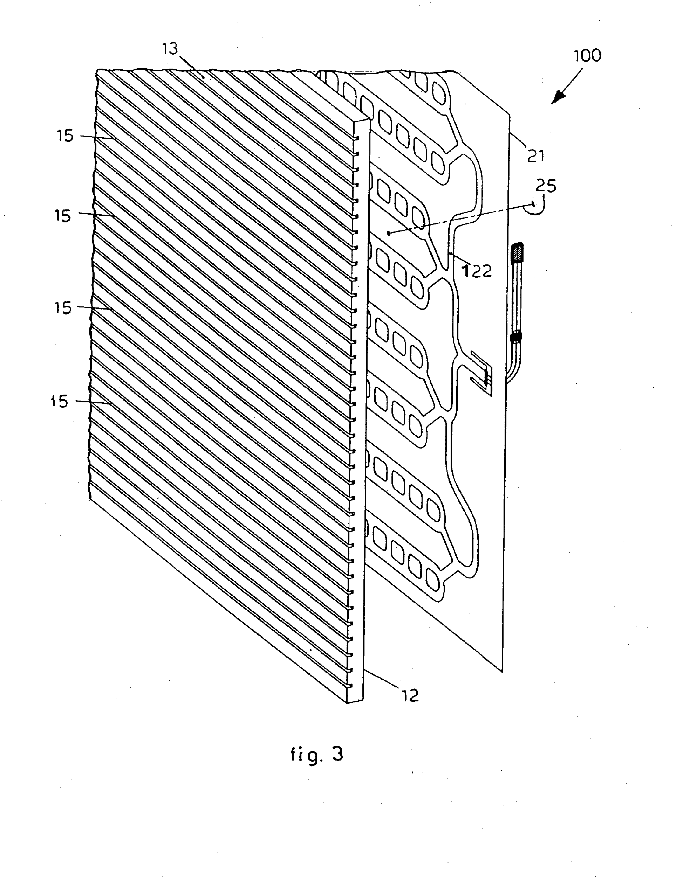

In this case, it is also provided to position an attachment screw 25 (fig. 3) disposed in a substantially median position of the radiant plate 21, to ensure a long-lasting attachment of the radiant plate 21 to the internal surface 12 of the panel 100.

Purely to give a non-restrictive example, the thermal circuit 122 of the radiant plate 21 can be obtained by serigraphic printing directly on the radiant plate 21, and protrudes from a rear surface of the latter.

In this way, we have complete adhesion between the radiant plate 21 and the internal surface 12 of the panel 100 so as to have a uniform and optimum thermal diffusion, substantially over the whole surface extension of the panel 10.

The radiant plates 21 of each panel 100 can be connected with each other in series, in order to have a single thermal regulation over the whole wall 11, or parallel, so that each panel 100 can be thermally regulated and/or replaced individually, without needing to interrupt the flow of the thermo vector fluid.

According to the invention, the panel 10, 100 is produced substantially in two main steps, that is, a first step to make the holes 16 and the grooves 15, and a second step to thermo-couple the radiant plate 21 on the rear surface of the panel 10 so as to form a single body between the two.

It is clear, however, that modifications and/or additions of parts may be made to the panel 10, 100 as described heretofore, and the relative production method, without departing from the scope of the present invention.

For example, it comes within the scope of the present invention to provide that the radiant plate 21 and the relative thermal circuit 122 are two distinct parts, solidly associated with each other only at the end of the assembly steps.

According to a variant, it may be provided only to dispose one or more shaped tubular coils in a coil seating, or directly associated with the internal surface 12 of the panel 10, without the radiant plate 21.

## Claims

1. Panel usable to form a sound-proofing and conditioning wall (11) of the modular type for covering walls (35) and/or ceilings and/or floors, said panel (10, 100) being made of wood-based composite material, such as plywood, MDF, chipboard and comprising at least an external surface (13) facing towards the space where the noise is generated, at least a groove (15) open towards the outside and made on said external surface (13) by means of mechanical working such as milling or etching, and an internal surface (12), opposite said external surface (13), said at least a groove (15) communicating with a through hole (16) also provided in the thickness of the panel (10, 100), **characterized in that** said through hole defines an enlargement with respect to the respective groove (15) and open towards said internal surface (12) so as to define a soundproofing chamber, the panel (10, 100) also comprising thermal conditioning means (22; 21, 122) attached to said internal surface (12), said thermal conditioning means (22; 21, 122) being mainly distributed on said internal surface (12) in a position that is offset with respect to said through holes (16), said through holes (16) being open on said internal surface (12) of said panel to further attenuate the sound waves passing through said grooves (15) and said through holes (16), and to allow the conditioned flux of air to move through said grooves (15) and said holes (16) towards the environment, which is thus thermally conditioned also exploiting the convective motions which move from the inside of the panel (10, 100) towards the outside and the environment.

2. Panel as in claim 1, **characterized in that** said thermal conditioning means comprises at least a tube (22) coupled with said internal surface (12).

3. Panel as in claim 2, **characterized in that** said at least a tube (12) is at least partly positioned inside a seating made in the thickness of the panel between said holes (16).

4. Panel as in claim 1, **characterized in that** said thermal conditioning means comprises at least a radiant plate (21) extending for a substantial part of the area of said internal surface (12).

5. Panel as in claim 4, **characterized in that** said thermal conditioning means comprises at least a thermal path (122) provided on said radiant plate (21), so as to emit a substantially uniform thermal flow.

6. Panel as in claim 5, **characterized in that** said thermal path (122) consists of a serigraphy made directly on said radiant plate (21).

7. Panel as in claim 4, **characterized in that** said radiant plate (21) is associated by thermo-coupling with said internal surface (12).

8. Panel as in any claim hereinbefore, **characterized in that** said thermal conditioning means (22; 21, 122) of two adjacent panels (10, 100) are connected with each other in series.

9. Panel as in any claim from 1 to 7, **characterized in that** said thermal conditioning means (22; 21, 122) of two adjacent panels (10, 100) are connected with each other in parallel.

10. Sound-proofing and conditioning wall of the modular type, comprising a plurality of panels (10, 100) according to any one of the preceding claims, and an insulation board (35), said insulation board (35) being distanced from the internal surface (12) of said panels (10, 100) by a gap in order to define therewith a chamber (34), said chamber (34) functioning as an attenuating means for the sound waves passing through the grooves (15) and the through holes (16) of said panels (10, 100), and allowing the conditioned flux of air to move through said chamber (34), said grooves (15) and said holes (16) towards the environment, which is thus thermally conditioned also exploiting the convective motions which move in said chamber (34) from the inside of the panel (10, 100) towards the outside and the environment.

11. Method for the production of a sound-proofing and conditioning wall of the modular type, comprising a step of providing a plurality of panels (10, 100) as in claim 1 having at least an external surface (13) facing towards the space where the noise is generated, at least a groove (15) being made on said front surface (13), open towards the outside and communicating with a through hole (16), and an internal surface (12), opposite said external surface (13), the method comprising a second step in which thermal conditioning means (22; 21, 121) are associated with said internal surface (12), so as to be integrated with said panel (10), **characterized in that** the method comprises a third step of providing an insulation board (35) distanced from said internal surface (12) by a gap which defines a chamber (34) wherein in said chamber (34) the conditioned flux of air is made to move towards the through holes (16) and the grooves (15) of said panels (10, 100) and then towards the environment, and wherein in said chamber (34) the sound waves produced in the environment and passing through the grooves (15) and the through holes (16) of said panels (10, 100) are subjected to a further attenuation.

## Patentansprüche

1. Platte, die zum Bilden einer modularen Schalldämmungs- und Konditionierungswand (11) verwendbar ist, um Wände (35) und/oder Decken und/oder Böden zu bedecken, wobei die Platte (10, 100) aus holzbasiertem Verbundmaterial wie Sperrholz, MDF, Spanholz gebildet ist, und wenigstens eine externe Oberfläche (13), die dem Raum zugewandt ist, in dem der Lärm erzeugt wird, wenigstens eine Nut (15), die zu der Außenseite hin geöffnet ist und auf der externen Oberfläche (13) mittels mechanischer Bearbeitung wie Fräsen oder Ätzen gebildet ist, und eine innere Oberfläche (12), die der externen Oberfläche (13) gegenüberliegt, umfasst, wobei die wenigstens eine Nut (15) mit einem Durchgangsloch (16) verbunden ist, welches ebenfalls in der Dicke der Platte (10, 100) vorgesehen ist, **dadurch gekennzeichnet, dass** das Durchgangsloch eine Vergrößerung bezüglich der entsprechenden Nut (15) definiert und zu der inneren Oberfläche (12) hin geöffnet ist, um eine schalldämmende Kammer zu definieren, wobei die Platte (10, 100) des Weiteren ein thermisches Konditionierungsmittel (22; 21, 122) umfasst, das an der inneren Oberfläche (12) befestigt ist, wobei das thermische Konditionierungsmittel (22; 21, 122) hauptsächlich auf der inneren Oberfläche (12) in einer Position angeordnet ist, die bezüglich der Durchgangslöcher (16) versetzt ist, wobei die Durchgangslöcher (16) auf der inneren Oberfläche (12) der Platte geöffnet sind, um die Schallwellen, die durch die Nuten (15) und die Durchgangslöcher (16) hindurchtreten, weiter zu dämpfen, und um dem konditionierten Luftfluss zu gestatten, sich durch die Nuten (15) und die Löcher (16) zu der Umgebung zu bewegen, die somit thermisch konditioniert ist, auch unter Ausnutzen der Konvektionsbewegungen, die sich von der Innenseite der Platte (10, 100) zu der Außenseite und der Umgebung bewegen.

2. Platte nach Anspruch 1, **dadurch gekennzeichnet, dass** die thermischen Konditionierungsmittel wenigstens einen Kanal (22) umfasst, der mit der inneren Oberfläche (12) gekoppelt ist.

3. Platte nach Anspruch 2, **dadurch gekennzeichnet, dass** der wenigstens eine Kanal (12) wenigstens teilweise in einer Aufnahme angeordnet ist, die in der Dicke der Platte zwischen den Löchern (16) gebildet ist.

4. Platte nach Anspruch 1, **dadurch gekennzeichnet, dass** das thermische Konditionierungsmittel wenigstens eine Radiantenplatte (21) umfasst, die sich über einen wesentlichen Teil der Fläche der inneren Oberfläche (12) erstreckt.

5. Platte nach Anspruch 4, **dadurch gekennzeichnet, dass** das thermische Konditionierungsmittel wenigstens einen thermischen Pfad (122) umfasst, der auf der Radiantenplatte (21) vorgesehen ist, um einen im Wesentlichen gleichförmigen thermischen Fluss abzugeben.

6. Platte nach Anspruch 5, **dadurch gekennzeichnet, dass** der thermische Pfad (122) aus einem Siebdruck besteht, der direkt auf der Radiantenplatte (21) gebildet ist.

7. Platte nach Anspruch 4, **dadurch gekennzeichnet, dass** die Radiantenplatte (21) mit der inneren Oberfläche (12) durch Thermo-Kupplung verbunden ist.

8. Platte nach einem der vorhergehenden Ansprüche, **dadurch gekennzeichnet, dass** die thermischen Konditionierungsmittel (22; 21, 122) von zwei benachbarten Platten (10, 100) seriell miteinander verbunden sind.

9. Platte nach einem der Ansprüche 1 bis 7, **dadurch gekennzeichnet, dass** die thermischen Konditionierungsmittel (22; 21, 122) von zwei benachbarten Platten (10, 100) parallel miteinander verbunden sind.

10. Modulare Schalldämmungs- und Konditionierungswand, umfassend eine Mehrzahl von Platten (10, 100) gemäß einem der vorhergehenden Ansprüche sowie eine Dämmplatte (35), wobei die Dämmplatte (35) um eine Lücke von der inneren Oberfläche (12) der Platten (10, 100) beabstandet ist, um dadurch eine Kammer (34) zu definieren, wobei die Kammer (34) als ein Dämpfmittel für die Schallwellen wirkt, die durch die Nuten (15) und die Durchgangslöcher (16) der Platten (10, 100) treten, und dem konditionierten Luftfluss gestattet, sich durch die Kammer (34), die Nuten (15) und die Löcher (16) zu der Umgebung, die somit thermisch konditioniert ist, zu bewegen, auch unter Ausnutzung der konvektiven Bewegungen, die sich in der Kammer (34) von der Innenseite der Platte (10, 100) zu der Außenseite und der Umgebung bewegen.

11. Verfahren zur Herstellung einer modularen Schalldämmungs- und Konditionierungswand, umfassend einen Schritt zum Vorsehen einer Mehrzahl von Platten (10, 100) nach Anspruch 1, die wenigstens eine externe Oberfläche (13), welche dem Raum zugewandt ist, wo Lärm erzeugt wird, wenigstens eine Nut (15), die auf der vorderen Oberfläche (13) gebildet ist, welche zu der Außenseite geöffnet ist und mit einem Durchgangsloch (16) verbunden ist, sowie eine innere Oberfläche (12) gegenüber der externen Oberfläche (13) umfasst, wobei das Verfahren einen zweiten Schritt umfasst, in dem thermisch konditionierende Mittel (22; 21, 121) mit der inneren Oberfläche (12) verbunden sind, um in der Platte (10) integriert zu sein, **dadurch gekennzeichnet, dass** das Verfahren einen dritten Schritt des Vorsehens einer Dämmplatte (35) umfasst, die von der inneren Oberfläche (12) um eine Lücke beabstandet ist, die eine Kammer (34) definiert, wobei der konditionierte Luftfluss in der Kammer (34) zu den Durchgangslöchern (16) und den Nuten (15) der Platte (10, 100) und dann zu der Umgebung bewegt wird, und wobei die Schallwellen, die in der Umgebung erzeugt werden und durch die Nuten (15) und die Durchgangslöcher (16) der Platten (10, 100) treten, einer weiteren Dämpfung ausgesetzt werden.

## Revendications

1. Panneau utilisable pour former une paroi d'insonorisation et de conditionnement (11) de type modulaire pour le recouvrement de murs (35) et/ou de plafonds et/ou de sols, ledit panneau (10, 100) étant réalisé en matériau composite à base de bois, tel qu'un panneau contreplaqué, un panneau MDF, un panneau d'aggloméré, et comprenant au moins une surface extérieure (13) tournée vers l'espace où est généré le bruit, au moins une rainure (15) ouverte vers l'extérieur et réalisée sur ladite surface extérieure (13) au moyen d'un usinage mécanique tel que fraisage ou gravure, et une surface intérieure (12), opposée à ladite surface extérieure (13), ladite au moins une rainure (15) communiquant avec un trou traversant (16) également prévu dans l'épaisseur du panneau (10, 100), **caractérisé par le fait que** ledit trou traversant définit un agrandissement par rapport à la rainure respective (15) et ouvert vers ladite surface intérieure (12) de manière à définir une chambre d'isolation acoustique, le panneau (10, 100) comprenant également un moyen de conditionnement thermique (22; 21, 122) fixé à ladite surface intérieure (12), ledit moyen de conditionnement thermique (22; 21, 122) étant réparti principalement sur ladite surface intérieure (12) en une position qui est décalée par rapport auxdits trous traversants (16), lesdits trous traversants (16) étant ouverts sur ladite surface intérieure (12) dudit panneau pour atténuer davantage les ondes sonores passant à travers lesdites rainures (15) et lesdits trous traversants (16), et pour permettre au flux d'air conditionné de passer à travers lesdites rainures (15) et lesdits trous (16) vers l'environnement qui est ainsi conditionné thermiquement en utilisant également les mouvements de convection qui se déplacent de l'intérieur du panneau (10, 100) vers l'extérieur et l'environnement.

2. Panneau selon la revendication 1, **caractérisé par le fait que** ledit moyen de conditionnement thermique comprend au moins un tube (22) couplé à ladite surface intérieure (12).

3. Panneau selon la revendication 2, **caractérisé par le fait que** ledit au moins un tube (12) est au moins partiellement positionné à l'intérieur d'un siège réalisé dans l'épaisseur du panneau entre lesdits trous (16).

4. Panneau selon la revendication 1, **caractérisé par le fait que** ledit moyen de conditionnement thermique comprend au moins une plaque rayonnante (21) s'étendant sur une partie substantielle de la superficie de ladite surface intérieure (12).

5. Panneau selon la revendication 4, **caractérisé par le fait que** ledit moyen de conditionnement thermique comprend au moins un trajet thermique (122) prévu sur ladite plaque rayonnante (21), de manière à émettre un flux thermique sensiblement uniforme.

6. Panneau selon la revendication 5, **caractérisé par le fait que** ledit trajet thermique (122) est constitué par une sérigraphie réalisée directement sur ladite plaque rayonnante (21).

7. Panneau selon la revendication 4, **caractérisé par le fait que** ladite plaque rayonnante (21) est associée par thermo-couplage à ladite surface intérieure (12).

8. Panneau selon l'une quelconque des revendications précédentes, **caractérisé par le fait que** lesdits moyens de conditionnement thermique (22; 21, 122) de deux panneaux adjacents (10, 100) sont connectés l'un à l'autre en série.

9. Panneau selon l'une quelconque des revendications 1 à 7, **caractérisé par le fait que** lesdits moyens de conditionnement thermique (22; 21, 122) de deux panneaux adjacents (10, 100) sont connectés l'un à l'autre en parallèle.

10. Paroi d'insonorisation et de conditionnement de type modulaire, comprenant une pluralité de panneaux (10, 100) selon l'une quelconque des revendications précédentes, et un panneau isolant (35), ledit panneau isolant (35) étant éloigné de la surface intérieure (12) desdits panneaux (10, 100) par un vide, afin de définir une chambre (34) avec cette dernière, ladite chambre (34) agissant comme moyen d'atténuation des ondes sonores passant à travers les rainures (15) et les trous traversants (16) desdits panneaux (10, 100), et permettant au flux d'air conditionné de passer à travers ladite chambre (34), lesdites rainures (15) et lesdits trous (16) vers l'environnement qui est ainsi conditionné thermiquement en utilisant également les mouvements de convection qui se déplacent dans ladite chambre (34) de l'intérieur du panneau (10, 100) vers l'extérieur et l'environnement.

11. Procédé pour la fabrication d'une paroi d'insonorisation et de conditionnement de type modulaire, comprenant une étape consistant à prévoir une pluralité de panneaux (10, 100) selon la revendication 1 présentant au moins une surface extérieure (13) tournée vers l'espace où est généré le bruit, au moins une rainure (15) étant réalisée sur ladite surface avant (13), ouverte vers l'extérieur et communiquant avec un trou traversant (16), et une surface intérieure (12), opposée à ladite surface extérieure (13), le procédé comprenant une deuxième étape dans laquelle des moyens de conditionnement thermique (22; 21, 121) sont associés à ladite surface intérieure (12), de manière à être intégrés audit panneau (10), **caractérisé par le fait que** le procédé comprend une troisième étape consistant à prévoir un panneau isolant (35) éloigné de ladite surface intérieure (12) par un vide qui définit une chambre (34), dans lequel, dans ladite chambre (34), le flux d'air conditionné est amené à se déplacer vers les trous traversants (16) et les rainures (15) desdits panneaux (10, 100) et ensuite vers l'environnement, et dans lequel, dans ladite chambre (3.4), les ondes sonores produites dans l'environnement et passant à travers les rainures (15) et les trous traversants (16) desdits panneaux (10, 100) sont soumises à une atténuation additionnelle.
